# EUROPEAN PATENT APPLICATION

(11) **EP 4 661 342 A1**
(43) Date of publication of application: **10.12.2025**
(21) Application number: 25178077.1
(22) Date of filing: 21.05.2025
(51) Int. Cl.: H04L 9/40, H04W 4/80, H04W 8/00, H04W 12/06, H04W 12/08, H04W 12/50

(54) **PRIVACY ENHANCED PROX CARDS FOR THIRD PARTY ACCESSORIES**

(30) Priority: 09.06.2024 US 202463657932 P; 21.01.2025 US 202519033111
(71) Applicant: Apple Inc., Cupertino, CA 95014 (US)
(72) Inventor: BRIGGS, Elliot S., Cupertino (US); PHAN, Duy N., Los Gatos (US); PITSCHEL, Donald W., Cupertino (US); MILDEN, Kevin C., Cupertino (US); RHEE, Stephen J., Cupertino (US); SARNA, Rahul, Cupertino (US); GANIR, Chen, Cupertino (US); BAO, Yixin, Cupertino (US); MANGALAM SRIVATSA, Akshay, Cupertino (US); PURCELL, Christopher R., Cupertino (US); LIN, Yen-Ta, Cupertino (US)
(74) Representative: Barton, Russell Glen

(57) **Abstract**

A method of secure accessory device discovery and radio pairing. The method may comprise, receiving, at a network access routine of a first device, data from a first application. The data may indicate one or more properties of an accessory device for communication with the first application. A list of one or more accessory devices capable of being connected to the first device via the radio may be determined through a radio of the first device. The network access routine may display an overlap list and receive a user selection responsive to the displayed list. The selection may be stored in an authentication database of the first device and radio communication by the first application may be restricted to accessory devices in the authentication database.

## Description

### CROSS-REFERENCES TO OTHER APPLICATIONS

This application claims priority to U.S. Patent Application No. 19/033,111, for "PRIVACY ENHANCED PROX CARDS FOR THIRD-PARTY ACCESSORIES" filed on January 21, 2025, which claims benefit of and priority to U.S. Provisional Application No. 63/657,932, for "PRIVACY ENHANCED PROX CARDS FOR THIRD-PARTY ACCESSORIES" filed on June 9, 2024, which are herein incorporated by reference in their entireties for all purposes.

### BACKGROUND OF THE INVENTION

Applications on mobile devices may be used to communicate with various accessory devices. However, this communication may result in various security risks and privacy risks. Thus, improvements are desired to address security concerns and to mitigate the risk posed by nefarious applications.

### BRIEF SUMMARY

Aspects of the disclosed technology may include a system of one or more computers which can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

Aspects of the disclosed technology include a system of one or more computers that can be configured to perform particular operations or actions by virtue of having software, firmware, hardware, or a combination of them installed on the system that in operation causes or cause the system to perform the actions. One or more computer programs can be configured to perform particular operations or actions by virtue of including instructions that, when executed by data processing apparatus, cause the apparatus to perform the actions.

Aspects of the disclosed technology include a method of secure accessory device discovery and radio pairing. The method may include receiving, at a network access routine of the first device, data from a first application running on the first device, the data indicating a one or more properties of an accessory device for communication with the first application; determining, through a radio of the first device, a list of one or more accessory devices, each accessory device of the list of one or more accessory devices capable of being connected to the first device via the radio; providing, to the network access routine, the list of one or more accessory devices; identifying, by the network access routine, one or more accessory devices present in the list of one or more accessory devices that have the one or more properties, thereby generating an overlap list of one or more matching accessory devices; displaying, on the first device, the overlap list; receiving, a selection of at least one accessory device from the overlap list; and storing, the selection in an authentication database of the first device; the authentication database may include the first application and the selection.. Additional aspects of the disclosed technology include corresponding computer systems, apparatus, and computer programs recorded on one or more computer storage devices.

Aspects of the disclosed technology may the method comprising restricting radio communication by the first application to accessory devices in the authentication database. The method may include receiving, at the network access routine from the first application, a communication request, and selecting by the network access routine a protocol for radio communication to complete the communication request based on the properties of the accessory device and a current network condition. The method may be performed using an Application Programming Interface (API).

A non-transitory computer readable medium containing instructions that, when executed by one or more processors, cause the one or more processors to perform any of the methods and/or features thereof. A system may include one or more processors and non-transitory computer readable medium containing instructions that, when executed by one or more processors, cause the system to perform any of the methods, steps, or processes described herein. The method may include receiving, at the network access routine from the first application, a communication request; and selecting by the network access routine a protocol for radio communication to complete the communication request based on the communication request. The method may include displaying an error message when the overlap list is empty. The radio may include a plurality of communication interfaces. The radio communication may be performed on a second communication interface. The first communication interface may be Bluetooth. The method may include displaying the overlap list in an overlay window on the first device. The authentication database may include information indicating one or more communication interfaces through which the first device and the selection at least one accessory device from the overlap list may communicate. The method may include storing the authentication database in a secure memory of the first device. The method may include encrypting the authentication database. The method may include removing the first application from the authentication database when the first application is removed from the first device. Additional aspects of the disclosed technology include corresponding computer systems, apparatus, and computer programs recorded on one or more computer storage devices.

One general aspect may include a method of communicating with an accessory device. The method may include receiving, at a network access routine from a first application, a request to communicate with a first accessory device using a radio of the first device. The method may include accessing, by the network access routine, an authentication database, the authentication database containing data indicating a list of approved accessory devices. The method may include determining, using the list of approved accessory devices, whether communication with the first accessory device may be supported. The method may include establishing a connection between the first application and the first accessory device when the first accessory device may be supported. Additional aspects of the disclosed technology include corresponding computer systems, apparatus, and computer programs recorded on one or more computer storage devices.

Aspects of the disclosed technology may include one or more of the following features. The method may include providing an error message when a match does not exist between the accessory device and the list of approved accessory devices. The authentication database is based on at least user input received during a secure pairing process. The method may include, receiving, by the network access routine from the authentication database, a positive message or a negative message, the positive message indicating that communication is permitted with the first accessory device and the negative message indicating that communication is not permitted with the first accessory device. The network access routine may perform a determination, using the list of approved accessory device, whether communication with the first accessory device may be supported. The method may include, receiving, by the network access routine from the authentication database, data indicating one or more communication interfaces which may be used to establish communication for each accessory device in the list of approved accessory devices. Implementations of the described techniques may include hardware, a method or process, or computer software on a computer-accessible medium. Additional aspects of the disclosed technology include corresponding computer systems, apparatus, and computer programs recorded on one or more computer storage devices.

### BRIEF DESCRIPTION OF THE DRAWINGS

FIG. 1 shows an example device with an overlay configured to receive user input according to embodiments of the present disclosure.
FIG. 2A illustrates a block diagram illustrating a mobile device and accessory devices according to embodiments of the disclosed technology.
FIG. 2B illustrates an authentication database according to example embodiments of the disclosed invention.
FIG. 2C illustrates a flow between components of a mobile device and an accessory device according to example embodiments of the disclosed invention.
FIG. 3 illustrates a method for saving selective access in an authentication database, according to embodiments of the present disclosure.
FIG. 4 illustrates a method of accessing an accessory device by an application, according to embodiments of the present disclosure.
FIG. 5A-5F illustrates a method related to API architecture, according to embodiments of the present disclosure.
FIG. 6 illustrates a block diagram of an example electronic device, according to embodiments of the present disclosure.

### DETAILED DESCRIPTION OF THE INVENTION

Third-party applications may be installed on a primary device to provide various functionalities of on the primary device. Often, these third-party applications may be related to or control another accessory device. For example, a third-party accessory device (e.g., a robot application or a smart home application) may only be controlled through the related third-party application. Currently, when third-party applications running on a device (e.g., smartphone) are granted access to a service (e.g., Bluetooth, NFC, etc.), the access provided to the application is persistent. Additionally, the access provided is not tailored to the relevant accessory device. For example, a robot application may be able to access all accessory devices which are broadcasting through a particular radio mechanism to which the application has been granted access.

This unfettered access by the third-party device may pose privacy and/or security risks to the user of the device. For example, the third-party application may collect user information from other accessory devices. This access is not necessary for the operation of an accessory device corresponding to the third-party application. Thus, it is desirable to control the pairing of the third-party application in a manner that limits the use of the radio for only the specific accessory device corresponding to the third-party application.

Aspects of the disclosed technology addresses the challenge of universal access by a third-party application via a radio through system mechanisms which restrict the access to an access list of devices. This access may be provided by a system or other API, which may control the flow of information.

In some examples, the third-party application may provide a system process with information about the type of accessory devices it wishes to pair with. In some examples, this may be performed through parameters (e.g., make, model, or keywords) or data (e.g., unique device identifiers, Bluetooth UUID) pushed from the third-party application to the system process. In some examples, this information may be provided with through an API. In some examples, an "extension" may be provided to a system process, which may be executed in a sandboxed environment to avoid the third-party application from receiving any pairing information or information about available devices.

A system process (or other routine) may then, initiate a discovery and pairing process. The system may obtain a list of all accessory devices to which the device may potentially pair and/or communicate with. The system process (or other routine) may filter the list of devices. Following the filtering, the system may to provide a notification to the user of a list of devices to which the third-party application may access through the radio. The notification may be provided prominently in an overlay window. The overlay window may be rendered to be displayed at the forefront of all the applications. The list of devices may be presented to the user for the user to select one or more devices. The overlay may also describe that the application will be able to communicate with the accessory device. User acknowledgment and user selection may occur through an interaction with the overlay window. The overlay window may contain additional information which may allow the user to understand that the application may now be able to communicate with the accessory device(s) which are approved by the user.

Upon the receipt of the user selection, this information may be stored in an authentication database on the device. The authentication database may indicate which third-party applications have access to which accessory devices through the radio. Thus, when accessing the accessory device, the third-party application may only access accessory devices which are previously selected by the user. The operating system of the device will approve attempts to access accessory devices which are stored on the authentication database. Attempts to use the radio for other purposes (e.g., another accessory device) are blocked by the OS.

### I. EXAMPLE PRIMARY DEVICE FOR PAIRING

Prior to a discussion of specific techniques related to providing selective access by an application to communicate with accessory devices through a communication interface (e.g., Bluetooth, local wireless, ad-hoc wireless, near-field communication (NFC), etc.), an example primary device and a related discussion of an overlay within a display of the primary device is provided.

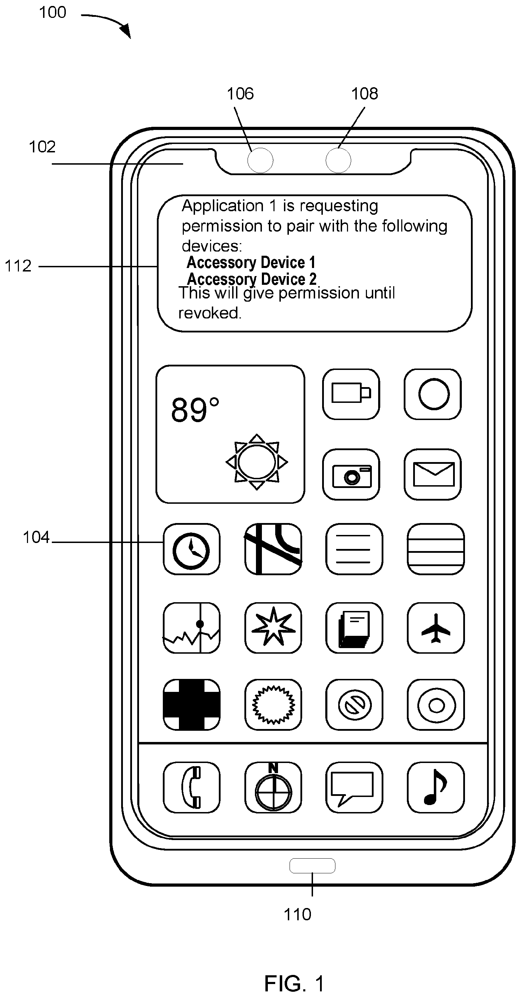

FIG. 1 is a diagram of a mobile device displaying an overlay, according to one or more embodiments. The mobile device 100 can be, for example, any suitable computing device such as a laptop or a smartphone. The mobile device 100 can include a display 102 for displaying a message (e.g., a connectivity message, an overlay, an interactive message requesting user input, etc.). The display 102 can include touch sensor technology for converting a touch to an electronic signal. The display 102 can be configured to display one or more application icons 104. In some embodiments, the mobile device 100 can include an image-capturing device 106, a microphone 108, and a speaker 110. Some of the application icons may correspond to applications which may request access to an accessory device.

The mobile device 100 can be configured to display one or more messages related to a pairing process between the mobile device 100 and an accessory device on the display 102 in an overlay 112. The overlay 112 can be displayed on a portion of the display 102. The overlay 112 may be generated by a system process of an application executing on the user device 100. The overlay 112 can further be larger than the one or more application icons 104. The overlay 112 can be configured to be displayed on a portion of the display 102.

As further explained herein, the overlay 112 may be provided for a user to select one or more devices. These devices may be accessory devices which have been identified by a discovery process. These devices may further have been filtered and/or matched based on information obtained from an application by a system process (or other routine) prior to being displayed in the overlay 112. While processes may exist for providing permissions to an application for certain types of services (e.g., location services GPS, Bluetooth), these processes do not provide information on which accessory devices are connected. Thus, rather than providing universal access to an application to access a radio and/or all communication interfaces on the device 100, the overlay may allow for selection of only those accessory devices which are related to information provided by the application and those which are selected by the user. This may allow for more granular control of the application and prevent security and/or privacy risks which may be present in universal access.

In some examples, the overlay 112 may be generated by a network access routine. Aspects of a network access routine are further discussed below. For example, a network access routine may determine an overlap between available devices and the type of devices requested by an application. This overlap may be presented as a list or other interface within the overlay 112. The overlay 112 may be interactive, and allow the user to provide input to one or more of the devices listed.

Upon receipt of user input, the overlay 112 may provide the selection of accessory devices to the network access routine. The network access routine (or other system routine) may store the information within a authentication database which may be accessed when an application attempts to communicate with a device which is not the mobile device 100 (e.g., an accessory device).

The generation and use of an authentication database in which the selected accessory devices may be stored is provided below.

### II. COMMUNICATION BETWEEN PRIMARY DEVICE AND ACCESSORIES

As further explained herein, communication can be configured such that an application may communicate with accessory devices selected for that application.. Subsequent to a process of discovering an accessory device that may be performed using a radio of a primary device (e.g., cellular phone), communication between an application on the primary device and the accessory device may be controlled based on a selection made by a user. The selection may be based on at least user input from a user interface.

As one example, it may be desirable for an application (e.g., a smart home application, a home automation application, a robot application etc.) that is installed on a primary device to only be able to communicate with certain accessory devices (e.g., smart home accessories, home automation accessories, robots etc.). As further explained below, selective communication by a robot application with one or more accessory devices (e.g., robots configured to operate with the robot application) may be facilitated through the use of an authentication database. Similarly, a smart home automation application may also selectively communicate with one or more accessory devices (e.g., smart home accessories) through the use of an authentication database. For example, the authentication database may only

The authentication database may be generated through the network access routine. Upon a subsequent attempt by the smart home application or the robot application to access an accessory, the smart home application or robot application may only use the radio to access the one or more accessory devices which have been selected for use for the respective application. Thus, granularity may be achieved for accessory device access, increasing security and privacy, without restricting the functionality of an application.

### A. Initial Discovery and Creation of Authentication Database

As further explained below, an authentication database can be used to store application specific permissions to access one or more accessory devices.

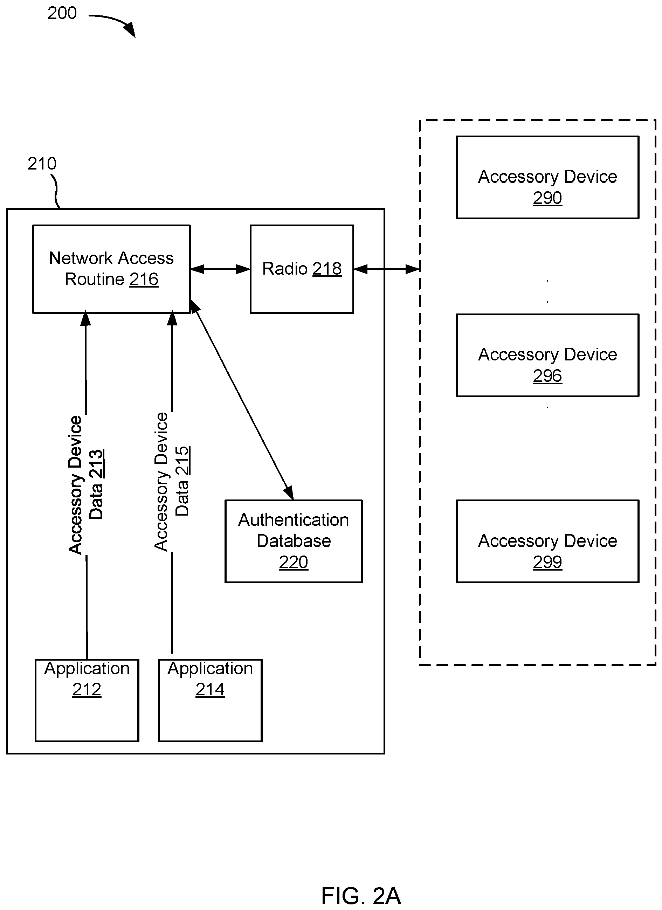

FIG. 2A illustrates a system according to embodiments of the disclosed technology. Illustrated in FIG. 2A is a system 200. System 200 may comprise a mobile device 210 and one or more accessory devices, such as accessory devices 290-299.

Mobile device 210 may be similar to mobile device 100. Mobile device 210 contain one or more applications (e.g., application 212 and application 214), a network access routine 216, a radio 218, and an authentication database 220.

The application 212 and the application 214 may be applications which are present on the mobile device. The application 212 and the application 214 may be instantiated on the mobile device 210. As further explained herein, the application 212 and the application 214 may contain functionality which may require communication with at least one of the accessory devices 290-299. For example, the application 212 may be a home automation application which requires communication with one or more accessory devices, such as motorized blinds or smart lights. The application 214 may be a robot application, which requires communication with a robot. While only two applications are illustrated for clarity, additional applications may be present on the mobile device 210.

Network access routine 216 may be a routine which is present on the mobile device 210. The network access routine 216 may be part of one or more software components present on the mobile device. In some examples, the network access routine 216 may be part of or configured to operate in conjunction with the drivers or other control software for the radio 218 of the mobile device 210. Network access routine 216 may also contain a sequence of instructions which may perform interpretation of requests received. Network access routine 216 may be a low-level routine that may contain functions, subroutines, or procedures to process requests which may be received by the network access routine 216. In some examples, the network access routine may be part of a third-party application to facilitate access between an application and the radio 218. In some examples, network access routine 216 may be part of the operating system of the mobile device 210. In other examples, the network access routine may be installed as an update or as a background application on the mobile device 210, such as for example, during an update to one or more components of the operating system of the mobile device 210. In some examples, requests or messages to the network access routine 216 may be made through an API. For example, various messages or API requests may be transmitted to the network access routine 216, including those received via API.

Network access routine 216 may handle low-level tasks such as managing hardware, memory, and system resources, to process API requests.

The radio 218 may be a component which may transmit and receive data. The radio 218 may enable communication between the mobile device 210 and the accessory devices 290-299. Radio 218 contain hardware and/or software components to wirelessly transmit and receive messages from the accessory devices 290-299. The radio 218 may be comprised of one or more communication interfaces, including for example, Bluetooth, Wi-FI, near filed communication. The radio 218 may also utilize one or more discovery protocols that provides the ability to discover the presence of the one or more accessory devices 290-299. For example, if a Bluetooth communication protocol is utilized, a Bluetooth capable subsystem may be used to scan for nearby devices. In some examples, Bluetooth (or another communication protocol) may act to determine other communication interfaces between the mobile device 210 and the one or more accessory devices 290-299.

The radio 218 may be capable of initiating a discovery process to identify or discovery one or more accessory devices. In some examples, the process may be initiated responsive to a request received from the network access routine 216. In some examples, the discovery process may be initiated responsive to a request, message, or API call made by an application on the mobile device 210. In some examples, an accessory device may have initiated a discovery process and/or pairing process. For example, an accessory device may be set in a discovery mode (e.g., through a physical button or other interface on the accessory device), which may allow it to broadcast and be accessible to the mobile device 210.

The discovery process may include scanning by an initiating device (e.g., the mobile device 210) for devices which may be discoverable. This may include transmitting an inquiry request, and receiving responses from the discoverable devices. The discoverable devices (e.g., the accessory devices 290-299) may respond with a response message, which may indicate for example, a device name, a device identifier, an address (e.g., a Bluetooth address), and other information indicating supported services and capabilities (e.g., compatible applications, other communication interfaces supported (e.g., NFC, Wi-Fi, ultra-wide band (UWB) etc.). The discovered devices may be stored or provided to the network access routine 216.

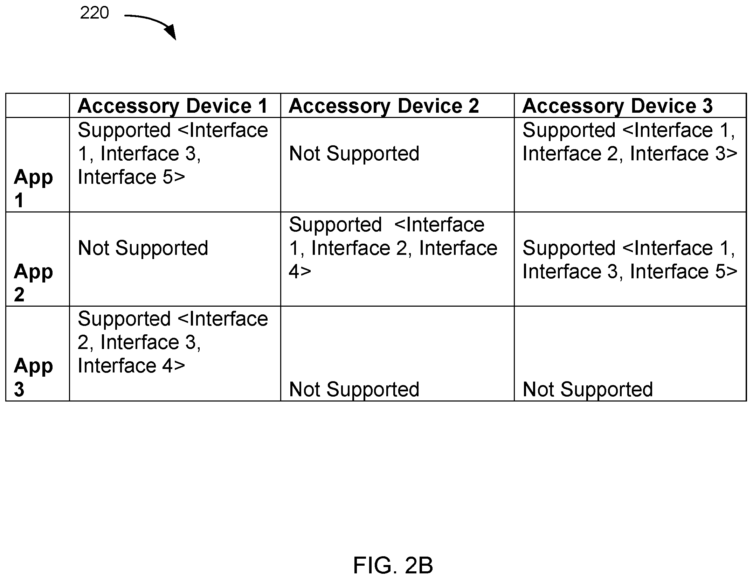

Authentication database 220 may be a database which stores information which may be used to allow an application to access an accessory device. For example, the authentication database may contain information that relates to the application 212 and the application 214 and may determine accessory devices from accessory devices 290-299 that the application 212 and the application 214 may connect with. The authentication database 220 may further be encrypted, contain security features, or only access through authorized processes, routines, and or APIs. Additional details of the authentication database 220 are provided below with respect to FIG. 2B.

The application 212 may send accessory device data 213 to the network access routine 216. Similarly, the application 214 may send accessory device data 215 to the network access routine 216. In some examples, this process may be initiated during a discovery process to discover one or more accessory devices which may be started on the application 212 or the application 214. The accessory device data 213 and the accessory device data 215 may contain information related to one or more of the accessory devices 290-299 that the respective applications 212 and 214 may communicate with. The accessory device data 213 may contain one or more properties related to the accessory devices. Example properties for the accessory devices provided via the accessory device data 213 and the accessory device data 215 may include for example, a model, a sub-model, a make, an identifier, a Universally Unique Identifier (UUID), a category (e.g., vacuum, lock, light, speaker), and a type (e.g., industrial vacuum, home vacuum, residential lighting, outdoor lighting).

The network access routine 216 may receive information from the radio 218 during a discovery process, such as that describe above. The network access routine 216 may compare information received through a discovery process with the information provided from the application 212 (via the accessory device data 213) and the application 214 (via the accessory device data 215). In some examples, the discovery routine may be initiated by the network access routine 216 upon receiving a message from the application 212 or the application 214.

The network access routine 216 may determine one or more accessories to include in the authentication database 220. For example, the network access routine 216 may determine a match between the data provided from the application 212 and information discovered from the accessory devices 290-299 during a discovery process. For example, if the application 212 is a home automation application, information from the accessory devices 290-299 may contain an indication that they relate to home automation (e.g., whether they have an identifier or a tag related to the specific application, a name which relates to home automation (e.g., a motorized blind)). Similarly, if the application 214 is a robot application, the network access routine 216 may determine whether there is a match between the information provided by the application 214 and those obtained from the radio 218. For example, if the accessory device 296 is a robot, the network access routine may determine that the accessory device 296 is related to the application 212 based on the information provided.

The network access routine 216 may cause an overlay to be created on the mobile device 210. The overlay may be similar to the overlay 112 discussed above in FIG. 1. The overlay may be populated with one or more devices for a user to select. For example, with respect to the example provided for the application 212, the accessory device 296 may be populated and presented for display to a user. Similarly, other accessory devices which have been determined by the network access routine 216 may also be presented in an overlay window for the user to view. The overlay may be generated by a system process or a system routine. In some examples, the list of devices provided in the overlay window may be provided after disambiguation. For example, the network access routine 216 may filter devices which are not a match to the application 212 and provide the remaining information in a human readable format.

The overlay may present an indication to the user that the devices being selected may be access by a particular application. In some examples, additional information about the devices may be presented in the overlay. For example, if a user long taps on a particular user device within the list of user devices, additional information about that particular accessory device may be presented. This information may be valuable to a user to make a determination of which of the options presented to select.

A user may select one or more of the options. Once a selection is made by a user, the network access routine may store those selection to the authentication database 220. Additional aspects of the authentication database 220 are further discussed below. It may be noted that until a selection is made by a user, the relevant application (e.g., application 212) may not be able to communicate with the accessory device or access the radio 218 for communication with the accessory device.

In some examples, the processes described above with respect to the network access routine 216 may be performed by an extension of the application. For example, an extension of the application may be code which may be executed within a sandboxed environment of the mobile device 210. The extension may directly access the radio 218 to perform discovery of accessory devices, and communicate with the one or more accessory devices to obtain additional information from the devices which may not be obtained as part of a standard payload. The extension may similarly provide an overview to the user to obtain permissions for which accessory devices the application may communicate with. This process may similarly store the approved accessory devices within the authentication database 220.

### B. Example Authentication Database

FIG. 2B illustrates the authentication database 220 according to example embodiments of the disclosed invention. As explained above, the authentication database 220 may be used to store permissions related to which applications may access a specific accessory device. Authentication database 220 is illustrated as a table, the authentication database 220 may include other data structures and variations. The authentication database 220 may be stored in a secure memory. The authentication database may also be encrypted prior to being stored, and decrypted or accessed through only certain routines or processes of the mobile device.

Illustrated for each application in the left-most column of the authentication databse 220 are "App 1" "App 2" and "App 3." This information may represent the identification of one or more applicatoins which have been installed on the mobile device 210. For example, "App 1" may be the application 212 while "App 2" may be the application 214. In some examples, the applications which are present in the authentication database 220 may be updated or removed when an application is installed or uninstalled on the mobile device 210. In some examples, the information related to a specific application may be persistent even when that application is uninstalled or otherwise removed from the mobile device 210.

Other columns may be associated with a respective accessory device. For example, "acccessory device 1," "accessory device 2," and "accessory device 3" are illustrated in the authentication database 220. A column may be added for a new accessory device after it first communicates with the mobile device 210. In this manner, each new accessory device will be stored and represented in the authentication database 220.

Each element of the authenticiation database 220 may contain information specific to the corresponding application and a corresponding accessory device. For example, certain cells are represented as "not supported" which may indicate that communication between a corresponding application and that accessory device is not supported or allowed. Other cells may indicate that communication is supported. The data structure within the cell may further specificy the communication interfaces through which communication between the application and the accessory device may be achieved. For example, for "App 1" and "Accessory Device 1" communication may be achieved through three different communication interfaces - "Interface 1," "Interface 3," and "Interface 5." Each interface may be a different communication interface. For example, Interface 1 may be Bluetooth, Interface 3 may be UWB, and Interface 5 may be near-field communication (NFC). In some examples, there may be no communication interface information contained with an application in the authentication database 220, and a universal permission to use any suitable radio and/or wireless communication interface may be stored in the authentication databse 220. In this example, the data structure may be one which corresponds to an approval or a denial.

As further explained below, when an application attempts to communicate with an accessory device through a communicate interface, the authentication databse 220 may be accessed to approve or deny that request.

### C. Additional Example Flow between Application and Approved Accessory Device(s)

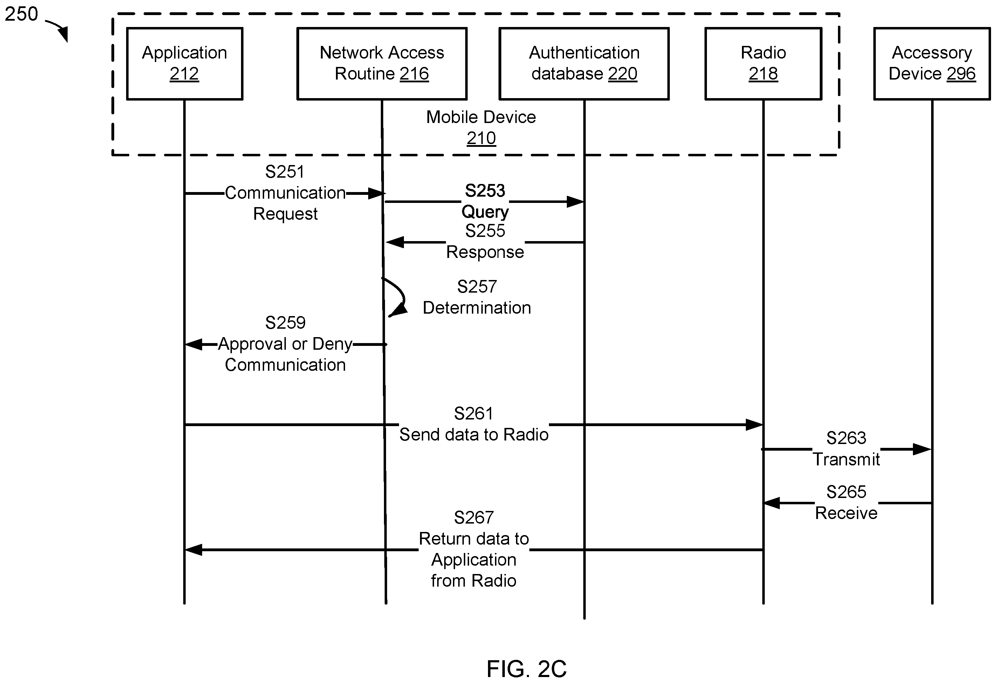

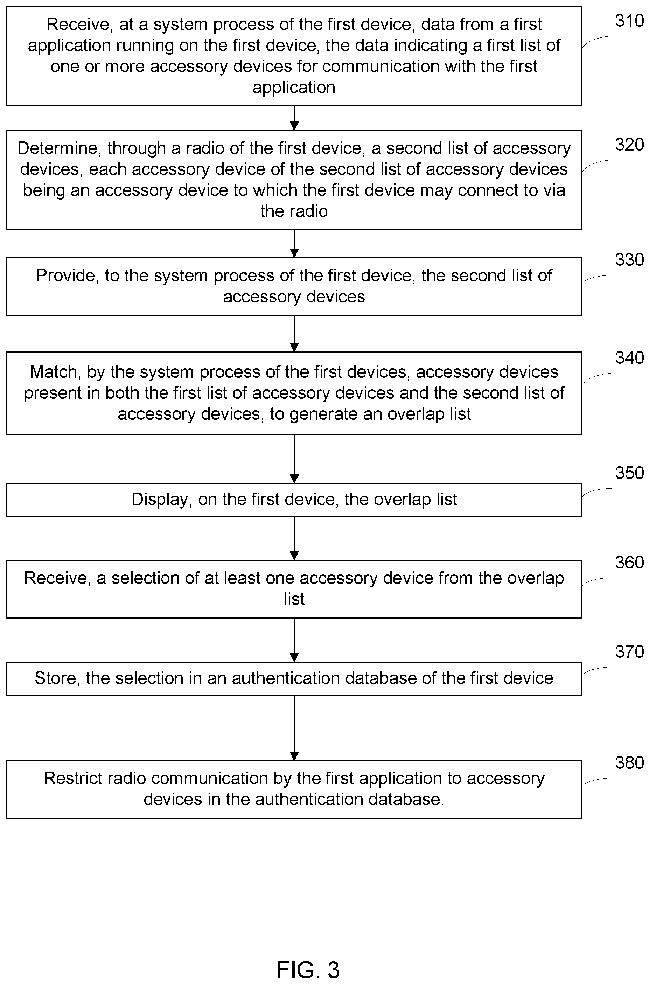

FIG. 2C illustrates a flow diagram according to embodiments of the disclosed technology. Illustrated in FIG. 3 is a flow 250 between the mobile device 310 and an accessory device 296. Accessory device 296 may be an accessory device which has been approved and stored in the authentication database 220 as being approved. Communication between various components of the mobile device 210 and with the accessory device 296 are illustrated. In flow 250, the accessory device 296 may have been previously approved by a user and stored in authentication database 220 as being approved.

In some examples, an extension or a routine of the operating system (OS) running on the mobile deviec 210 may perform orchestration. For example, API calls or other calls may be made to the OS, which may then perform certain steps on behalf of the application. In this manner, it may be ensured that only an approved accessory device (e.g., the accessory device 296) is only linked with the application 212, while other accessory devices may not communicate with the application.

At S251, a request may be transmitted between the application 212 and the network access routine 216. The request may be generated by the application 212. The request may identify one or more of the accessory devices 291-299 for which communication is requested. The request may be transmitted as a message or through an API which may allow the application to call and request the network access routine 216. In other examples, a message may be configured to be transmitted from the runtime or other memory of the application 212 to the netowrk access routine 216. The network access routine 216 may process the received request to determine the application that has made a request. The network access routine 216 may further also determine the accessory devices that the application 212 requests to communicate with.

At S253, the network access routine 216 may generate a generate a query based on the request. The query may be made to an authentication databse 220. The query may be formatted to access secure portions of a memory on which the authentication database 220 is stored. In some examples, the authentication database 220 may only be accessed through the network access routine 216. The query may be transmitted or queried against the authentication database 220. The query may also include one or more modalities or interfaces through which communication may be established between the accessory devices and the mobile device 210.

At S255, a response may be obtained from the authentication database 220. The authentication database 220 may return information regarding one or more accessory devices to which the applicatoin 212 may communicate. Further, the authentication database 220 may also provide the communication interfaces through which communication may be established.

At S257, the network access routine 216 may determine, using the response (query result) from the database, whether the application 212 is authorized to access the one or more specific accessories. In one implementation, the query may include a particular accessory, and the response can return a positive or negative value about whether the accessory is suported. In another implementation, the query can be for a list of supported accessors (e.g., for a particular interface), and the response can provide a list of suported accessories. The network access routine 216 can then determine whether the requested accessory is on the list of supported accessory devices. For example, the network access routine 216 may determine whether the network access routine is able to access the accessory device 296. The network access routine 216 may generate a message to be transmitted to the application 212 based on the results of the determiantion. For instance, if no match exists, an error message may be generated. If a match exists, an approval message or other information allowing the application 212 to access the radio 218 may be generated. An approval message may also contain information which indicates the one or more accessory devices to which the application 212 may communicate with.

At S259, a message or other information may be transmitted to the application 212. This information may include, for example, an approval message or an error message. The application 212 may be configured to perform an action based on the message received from the network access routine 212. For example, when an error message is received, the application 212 may display an error indication on the mobile device 210. The error message may indicate to the user that approval is required for a specific accessory device. If an approval message is received, the application 212 may initiate communication with an approved accessory device (e.g., accessory device 296).

At S261, the application 212 may utilize the radio 218 and provide information to be transmitted to the accessory device via the radio 218. The use by the application 212 may thus be restricted based on a previous approval in the authentication databse 220. For example, the radio 218 may allow for bluetooth communication. In such an example, a bluetooth API or other communication API may be used to utilize the radio 218. Other communication protocols may be possible, including UWB, Wi-Fi, NFC, etc. Although a single radio is illustrated, one or more radios and communication interfaces may be present and/or included in the mobile device 210.

At S263, a message may be transmitted from the radio 218 to the accessory device 296. In some examples, communication may be establisehd through the transmission of a message. In other examples, communication informatoin to control and/or communicate with the accessory device 296 may be establisehd at 263.

At S265, a message may be received at the radio 218 from the accessory device 296. The accessory device 296 may provide information responsive to the message previously received from the radio 218.

At S267, information received from the accessory device 296 may be relayed to the application 212 from the radio 218. In some examples, this information may be used by the application 212 to generate an output for the user. In other examples, this information may be used to further generate additional information to transmit to the accessory device 296.

In some eamples, S261-S267 may be repeated by the application 212 until the application terminates communication with the accessory device 296.

### III. EXAMPLE METHODS

Example methods are provided below according to embodiments of the disclosed invnetion. The example methods illustrate the process of creation of an authentication database. The example methods also illustrate the communication between an application on the primary device and an approved accessory device.

### A. Example Method for Saving Selective Access in an Authentication Database

FIG. 3 illustrates a method 300 according to aspects of the disclosed technology. Method 300 may be used to create an authentication database which may be used to control access by an application on a mobile device with one or more accessory devices.

At block 310 data from a first application running on the first device (e.g., the mobile device 210) may be received at a network access routine (e.g., the network access routine 216) of the first device, The data received may indicate one or more properties of an accessory device which may be related or used for communication with the first application. For example, the data received may be similar to the accessory device data 213 and the accessory device data 215 illustrated with respect to FIG. 2A. The data may contain one or more properties related to an accessory device or a third-party device. Example properties which may be contained within the received data related to the accessory devices may include for example, a model, a sub-model, a make, an identifier, a Universally Unique Identifier (UUID), a category (e.g., vacuum, lock, light, speaker), and a type (industrial vacuum, home vacuum, residential lighting, outdoor lighting).

At block 320 a list of one or more accessory devices may be determined through a radio (e.g., the radio 218) of the first device. The list of one or more accessory devices may be accessory devices that are capable of being connected to the first device via the radio of the first device. A discovery mechanism may be used to discover one or more accessory devices. For example, a discovery mechanism may search for one or more types of signals which are being broadcast and are received by the accessory device. In some examples, standardized signals may be received by the first device. The signals may be recognized by the first device as signals indicating the availability of an accessory device to be connected with the first device. For example, Bluetooth Advertising Packets may be used in Bluetooth communication interfaces. Similar signals may be received by the same or other radios of the first device. For example, an NFC signal, a Wi-Fi signal, and an UWB signal may all be received. The available accessory devices may be stored as a list.

At block 330, the list of one or more accessory devices may be provided to the network access routine of the first device. The network access routine may receive this information through an API or other protocol from the radio. In some examples, the network access routine may periodically request the information from the radio. For example, the network access routine 216 may request the information from the radio 218 at a fixed interval. The network access routine may also store this information in a temporary cache or other memory.

At block 340, the network access routine may identify one or more accessory devices present in the list of one or more accessory devices. The identification may be based on those devices that have the one or more properties provided by the application to the network access routine. The network access routine may determine if there is an overlap between the properties and the list of one or more accessory devices to generate an overlap list of one or more matching accessory devices.

At block 340, the overlap list may be displayed on the first device. The overlap list may be displayed in a user interface which may contain information from the overlap list. The overlay may be populated with one or more devices for a user to select. For example, with respect to the example provided for the application 212, the accessory device 296 may be populated and presented for display to a user. Similarly, other accessory devices which have been determined by the network access routine 216 may also be presented in an overlay window for the user to view. The overlay may be generated by a system process or a system routine. The overlay may present an indication to the user that the devices being selected may be access by a particular application. In some examples, additional information about the devices may be presented in the overlay. For example, if a user long taps on a particular user device within the list of user devices, additional information about that particular accessory device may be presented. This information may be valuable to a user to make a determination of which of the options presented to select. The overlay window may contain additional information which may allow the user to understand that the application may now be able to communicate with the accessory device(s) which are approved by the user.

At block 350, a selection of at least one accessory device from the overlap list may be received. The receipt may be based on a user input received which indicates the accessory devices the user has determined may be in communication with the application. The selection made is made for a particular application, and is not shared across applications. Thus, a unique correspondence set of accessory devices may be established for each application.

At block 360, the selection may be stored in an authentication database (e.g., authentication database 220) of the first device. The authentication database may comprise the first application and the selection. In some examples, the applications which are present in the authentication database may be updated or removed when an application is installed or uninstalled on the mobile device. In some examples, the information related to a specific application may be persistent even when that application is uninstalled or otherwise removed from the mobile device. Each element of the authenticiation database may contain information specific to the corresponding application and a corresponding accessory device. In some examples, there may be no communication interface information contained with an application in the authentication database , and a universal permission to use any suitable radio and/or wireless communication interface may be stored in the authentication database.

At block 370, radio communication by the first application to accessory devices may be restricted to those applications which are present in the authentication database. Each element of the authenticiation database may contain information specific to the corresponding application and a corresponding accessory device. As an application attempts to communicate with an accessory device through a communicate interface, the authentication 220 may be accessed to approve or deny that request. For example, as explained with resepct to FIG. 2C, radio communication may be restricted to only those accessory devices which are present in the authentication databse.

In some examples, systems processes or OS processes of the first device may modify or restrict the access of an application within the authentication databse. For example, certain applications which may be deemed to be malicious may be unconditionally denied in the authentication databse. In some examples, trusted or system applications may be provided with unconditional access to use all radios. In some examples, the radio may comprise communication interfaces, which may be a combination of physical interfaces and/or software. In some examples, the network access routine may choose a protocol for radio communication radio based on the properties of the accessory device and a current network condition. In some examples, the network access routine may select a protocol for radio communication radio based on a communication request of the first device (e.g., type of request, latency requirements, energy efficiency, size of payload or data, etc.). In some examples, one or more of the blocks may be performed at various layers of a communication protocol, which may be defined with respect to the communication protocol. In some examples, an API may be used to access secure functionality.

In some examples, each attempt to access the authentication database or to access an accessory device by an application may be logged. In some examples, upon a threshold number of failed attempts being met, an application may be prevented from accessing the radio.

### B. Example Method for Accessing Accessory Device by Application

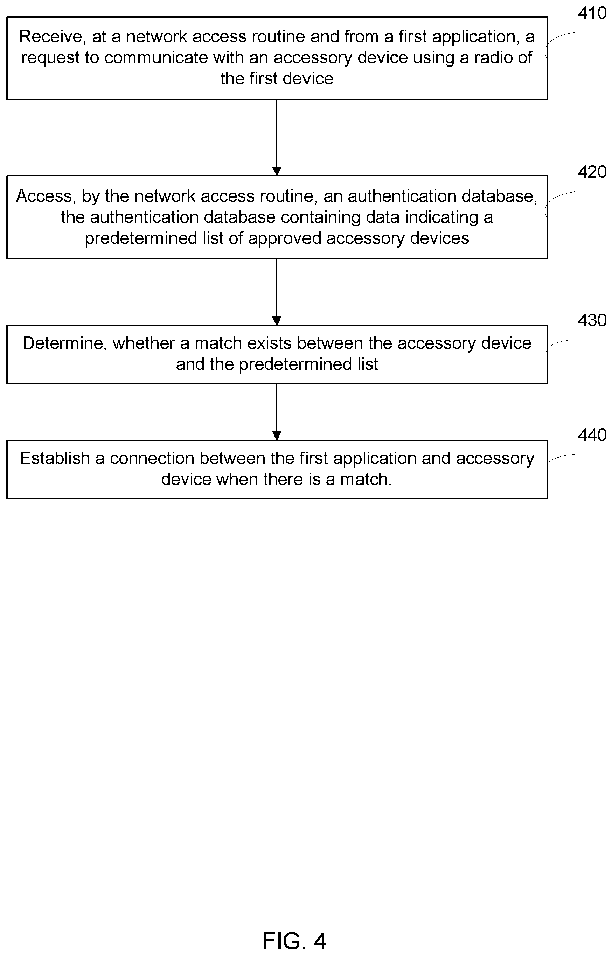

Fig. 4 illustrates a method 400. Method 400 may relate to a request made by one or more applications on a mobile device. The method 400 may be used for secure accessory device discovery and radio pairing, and subsequent access by an application with the radio.

At block 410, a system process may receive from a first application, a request to communicate with an accessory device. The system process may be similar to the network access routine 216. The system process may be a system routine, a system subroutine, a radio routine, or a network access routine. The first application may be an application which has been installed on the primary device. The request may identify an accessory device with which the application wishes to communicate.

At block 420, an authentication database may be accessed by the system process. The authentication database may contain data which may indicate a predetermined list of approved accessory devices. The authentication database may be the authentication database 220. The list of approved accessory devices may be generated based on previous user input related received from an overlay.

At block 430, it may be determined whether a match exists between the accessory device and the predetermined list. The determination may be made by the system process.

At block 440, upon a match being determined, a connection between the first application and accessory device may be established. In some examples, the application may access a radio (or other communication interface) of the first device. The access may be granted based on an API. In other examples, system routines and the OS of the first device (e.g., the mobile device 210) may be used to facilitate the connection between the first application and the accessory device.

In some examples, an error message or an approval message may be received. For example, when an error message is received, the application 212 may display an error indication on the mobile device 210. The error message may indicate to the user that approval is required for a specific accessory device. If an approval message is received, the application 212 may initiate communication with an approved accessory device (e.g., accessory device 296). In some examples, the network access routine may receive from the authentication database, a positive message or a negative message. The positive message may indicate that communication is permitted with the first accessory device and the negative message may indicate that communication is not permitted with the first accessory device. In some examples, the network access routine may perform the determination by using the list of approved accessory device. It may thus determine whether communication with the first accessory device is supported. The network access routine may receive data from the authentication database which may indicate one or more communication interfaces which may be used to establish communication for each accessory device in the list of approved accessory device.

### IV. EXAMPLE API ARCHITECTURE AND METHODS

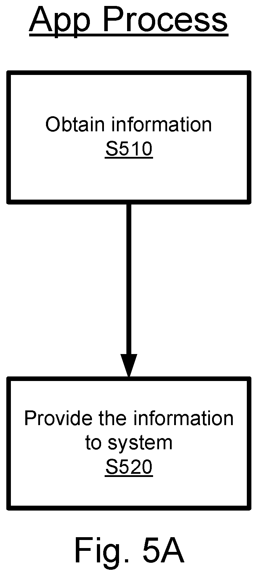

FIGs. 5A-5F are flowcharts of a method related to various embodiments related to API support.

Implementations within the scope of the present disclosure can be partially or entirely realized using a tangible computer-readable storage medium (or multiple tangible computer-readable storage media of one or more types) encoding one or more computer-readable instructions. It should be recognized that computer-executable instructions can be organized in any format, including applications, widgets, processes, software, and/or components.

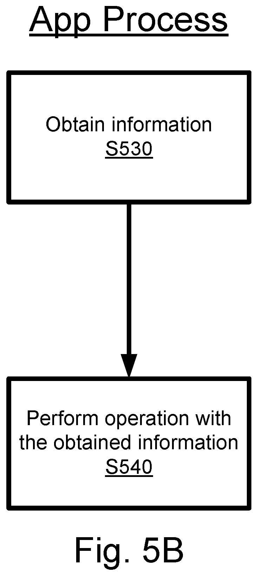

Implementations within the scope of the present disclosure include a computer-readable storage medium that encodes instructions organized as an application (e.g., application 560) that, when executed by one or more processing units, control an electronic device (e.g., device 550) to perform the method of FIG. 5A, the method of FIG. 5B, and/or one or more other processes and/or methods described herein.

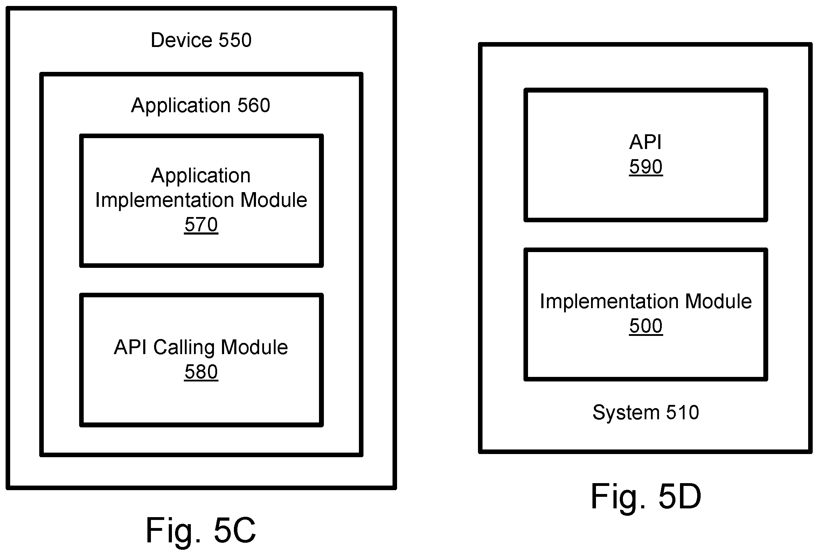

It should be recognized that application 560 (shown in FIG. 5C) can be any suitable type of application, including, for example, one or more of: an accessory device application, a browser application, an application that functions as an execution environment for plug-ins, widgets or other applications, a fitness application, a health application, a digital payments application, a media application, a social network application, a messaging application, and/or a maps application. In some embodiments, application 560 is an application that is pre-installed on device 550 at purchase (e.g., a first party application). In other embodiments, application 560 is an application that is provided to device 550 via an operating system update file (e.g., a first party application or a second party application). In other embodiments, application 560 is an application that is provided via an application store. In some embodiments, the application store can be an application store that is pre-installed on device 550 at purchase (e.g., a first party application store). In other embodiments, the application store is a third-party application store (e.g., an application store that is provided by another application store, downloaded via a network, and/or read from a storage device).

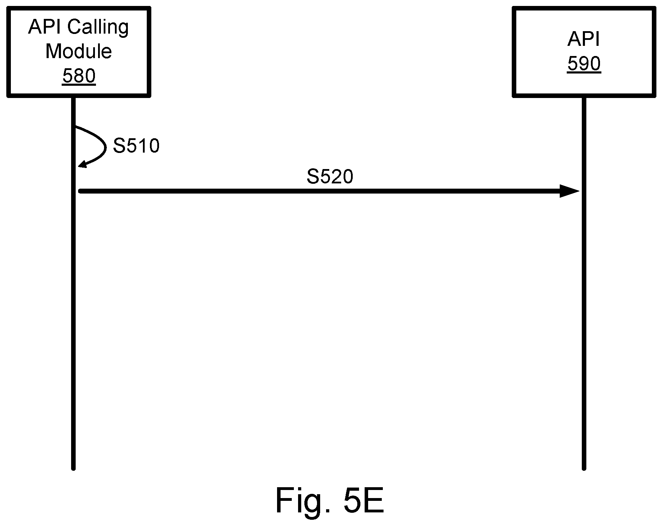

Referring to FIG. 5A and FIG 5E, application 560 obtains information (e.g., S510). In some embodiments, at S510, information is obtained from at least one hardware component of the device 550. In some embodiments, at S510, information is obtained from at least one software module of the device 550. In some embodiments, at S510, information is obtained from at least one hardware component external to the device 550 (e.g., a peripheral device, an accessory device, a server, etc.). In some embodiments, the information obtained at S510 includes positional information, time information, notification information, user information, environment information, electronic device state information, weather information, media information, historical information, event information, hardware information, and/or motion information. In some embodiments, in response to and/or after obtaining the information at S510, application 560 provides the information to a system (e.g., S520).

In some embodiments, the system (e.g., 510 shown in FIG. 5D) is an operating system hosted on the device 550. In some embodiments, the system (e.g., 510 shown in FiG. 5D) is an external device (e.g., a server, a peripheral device, an accessory, a personal computing device, etc.) that includes an operating system.

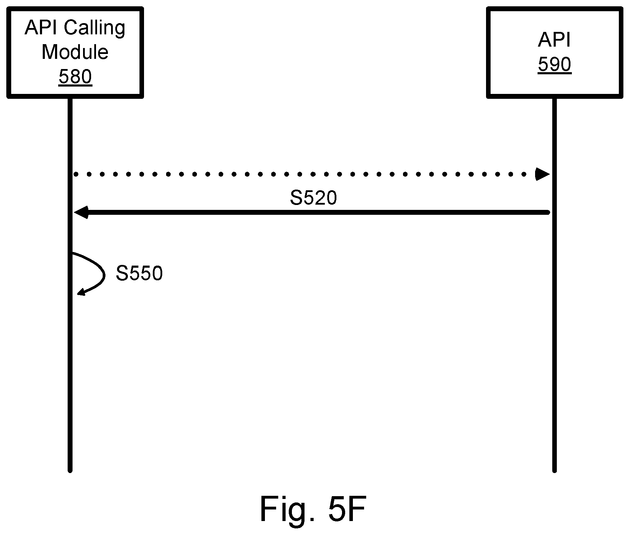

Referring to FIG. 5B and FIG. 5F, application 560 obtains information (e.g., S530). In some embodiments, the information obtained at S530 includes positional information, time information, notification information, user information, environment information electronic device state information, weather information, media information, historical information, event information, hardware information and/or motion information. In response to and/or after obtaining the information at S530, application 560 performs an operation with the information (e.g., S540). In some embodiments, the operation performed at S540 includes: providing a notification based on the information, sending a message based on the information, displaying the information, controlling a user interface of a fitness application based on the information, controlling a user interface of a health application based on the information, controlling a focus mode based on the information, setting a reminder based on the information, adding a calendar entry based on the information, and/or calling an API of system 510 based on the information.

In some embodiments, one or more steps of the method of FIG. 5A and/or the method of FIG. 5B is performed in response to a trigger. In some embodiments, the trigger includes detection of an event, a notification received from system 510, a user input, and/or a response to a call to an API provided by system 510.

In some embodiments, the instructions of application 560, when executed, control device 550 to perform the method of FIG. 5A and/or the method of FIG. 5B by calling an application programming interface (API) (e.g., API 590) provided by system 510. In some embodiments, application 560 performs at least a portion of the method of FIG. 5A and/or the method of FIG. 5B without calling API 590.

In some embodiments, one or more steps of the method of FIG. 5A and/or the method of FIG. 5B includes calling an API (e.g., API 590) using one or more parameters defined by the API. In some embodiments, the one or more parameters include a constant, a key, a data structure, an object, an object class, a variable, a data type, a pointer, an array, a list or a pointer to a function or method, and/or another way to reference a data or other item to be passed via the API.

Referring to FIG. 5C, device 550 is illustrated. In some embodiments, device 550 is a personal computing device, a smart phone, a smart watch, a fitness tracker, a head mounted display (HMD) device, a media device, a communal device, a speaker, a television, and/or a tablet. As illustrated in FIG. 5C, device 550 includes application 560 and operating system (e.g., system 510 shown in FIG. 5D). Application 560 includes application implementation module 570 and API calling module 580. System 510 includes API 590 and implementation module 500. It should be recognized that device 550, application 560, and/or system 510 can include more, fewer, and/or different components than illustrated in FIG. 5C and 5D.

In some embodiments, application implementation module 570 includes a set of one or more instructions corresponding to one or more operations performed by application 560. For example, when application 560 is a messaging application, application implementation module 570 can include operations to receive and send messages. In some embodiments, application implementation module 570 communicates with API calling module to communicate with system 510 via API 590 (shown in FIG. 5D).

In some embodiments, API 590 is a software module (e.g., a collection of computer-readable instructions) that provides an interface that allows a different module (e.g., API calling module 580) to access and/or use one or more functions, methods, procedures, data structures, classes, and/or other services provided by implementation module 500 of system 510. For example, API-calling module 580 can access a feature of implementation module 500 through one or more API calls or invocations (e.g., embodied by a function or a method call) exposed by API 590 and can pass data and/or control information using one or more parameters via the API calls or invocations. In some embodiments, API 590 allows application 560 to use a service provided by a Software Development Kit (SDK) library. In other embodiments, application 560 incorporates a call to a function or method provided by the SDK library and provided by API 590 or uses data types or objects defined in the SDK library and provided by API 590. In some embodiments, API-calling module 580 makes an API call via API 590 to access and use a feature of implementation module 500 that is specified by API 590. In such embodiments, implementation module 500 can return a value via API 590 to API-calling module 580 in response to the API call. The value can report to application 560 the capabilities or state of a hardware component of device 550, including those related to aspects such as input capabilities and state, output capabilities and state, processing capability, power state, storage capacity and state, and/or communications capability. In some embodiments, API 590 is implemented in part by firmware, microcode, or other low level logic that executes in part on the hardware component.

In some embodiments, API 590 allows a developer of API-calling module 580 (which can be a third-party developer) to leverage a feature provided by implementation module 500. In such embodiments, there can be one or more API-calling modules (e.g., including API-calling module 580) that communicate with implementation module 500. In some embodiments, API 590 allows multiple API-calling modules written in different programming languages to communicate with implementation module 500 (e.g., API 590 can include features for translating calls and returns between implementation module 500 and API-calling module 580) while API 590 is implemented in terms of a specific programming language. In some embodiments, API-calling module 580 calls APIs from different providers such as a set of APIs from an OS provider, another set of APIs from a plug-in provider, and/or another set of APIs from another provider (e.g., the provider of a software library) or creator of the another set of APIs.

Examples of API 590 can include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a Wi-Fi API, a Bluetooth API, an NFC API, a UWB API, a fitness API, a smart home API, contact transfer API, photos API, camera API, and/or image processing API. In some embodiments the sensor API is an API for accessing data associated with a sensor of device 550. For example, the sensor API can provide access to raw sensor data. For another example, the sensor API can provide data derived (and/or generated) from the raw sensor data. In some embodiments, the sensor data includes temperature data, image data, video data, audio data, heart rate data, IMU (inertial measurement unit) data, lidar data, location data, GPS data, and/or camera data. In some embodiments, the sensor includes one or more of an accelerometer, temperature sensor, infrared sensor, optical sensor, heartrate sensor, barometer, gyroscope, proximity sensor, temperature sensor and/or biometric sensor.

In some embodiments, implementation module 500 is a system (e.g., operating system, server system) software module (e.g., a collection of computer-readable instructions) that is constructed to perform an operation in response to receiving an API call via API 590. In some embodiments, implementation module 500 is constructed to provide an API response (via API 590) as a result of processing an API call. By way of example, implementation module 500 and API-calling module 180 can each be any one of an operating system, a library, a device driver, an API, an application program, or other module. It should be understood that implementation module 500 and API-calling module 580 can be the same or different type of module from each other. In some embodiments, implementation module 500 is embodied at least in part in firmware, microcode, or other hardware logic.

In some embodiments, implementation module 500 returns a value through API 590 in response to an API call from API-calling module 580. While API 590 defines the syntax and result of an API call (e.g., how to invoke the API call and what the API call does), API 590 might not reveal how implementation module 500 accomplishes the function specified by the API call. Various API calls are transferred via the one or more application programming interfaces between API-calling module 580 and implementation module 500. Transferring the API calls can include issuing, initiating, invoking, calling, receiving, returning, and/or responding to the function calls or messages. In other words, transferring can describe actions by either of API-calling module 580 or implementation module 500. In some embodiments, a function call or other invocation of API 590 sends and/or receives one or more parameters through a parameter list or other structure.

In some embodiments, implementation module 500 provides more than one API, each providing a different view of or with different aspects of functionality implemented by implementation module 500. For example, one API of implementation module 500 can provide a first set of functions and can be exposed to third-party developers, and another API of implementation module 500 can be hidden (e.g., not exposed) and provide a subset of the first set of functions and also provide another set of functions, such as testing or debugging functions which are not in the first set of functions. In some embodiments, implementation module 500 calls one or more other components via an underlying API and thus be both an API calling module and an implementation module. It should be recognized that implementation module 500 can include additional functions, methods, classes, data structures, and/or other features that are not specified through API 590 and are not available to API calling module 580. It should also be recognized that API calling module 580 can be on the same system as implementation module 500 or can be located remotely and access implementation module 500 using API 590 over a network. In some embodiments, implementation module 500, API 590, and/or API-calling module 580 is stored in a machine-readable medium, which includes any mechanism for storing information in a form readable by a machine (e.g., a computer or other data processing system). For example, a machine-readable medium can include magnetic disks, optical disks, random access memory; read only memory, and/or flash memory devices.

In some embodiments, method 300 (FIG. 3) and method 400 (FIG. 4) are performed at a first computer system (as described herein) via a system process (e.g., an operating system process, a server system process) that is different from one or more applications executing and/or installed on the first computer system.

In some embodiments, method 300 (FIG. 3) and method 400 (FIG. 4) are performed at a first computer system (as described herein) by an application that is different from a system process. In some embodiments, the instructions of the application, when executed, control the first computer system to perform method 300 (FIG. 3) and method 400 (FIG. 4) by calling an application programming interface (API) provided by the system process. In some embodiments, the application performs at least a portion of method 300 and method 400 without calling the API.

In some embodiments, the application is an accessory companion application that is constructed for processing communication and management between the first computer system and an accessory device (e.g., a wearable device, such as, for example, a watch).

In some embodiments, the application is an application that is pre-installed on the first computer system at purchase (e.g., a first party application). In other embodiments, the application is an application that is provided to the first computer system via an operating system update file (e.g., a first party application). In other embodiments, the application is an application that is provided via an application store. In some implementations, the application store is pre-installed on the first computer system at purchase (e.g., a first party application store) and allows download of one or more applications. In some embodiments, the application store is a third-party application store (e.g., an application store that is provided by another device, downloaded via a network, and/or read from a storage device). In some embodiments, the application is a third-party application (e.g., an app that is provided by an application store, downloaded via a network, and/or read from a storage device). In some embodiments, the application controls the first computer system to perform method 300 (FIG. 3) and method 400 (FIG. 4) by calling an application programming interface (API) provided by the system process using one or more parameters.

In some embodiments, exemplary APIs provided by the system process include one or more of: a pairing API (e.g., for establishing secure connection, e.g., with an accessory), a device detection API (e.g., for locating nearby devices, e.g., media devices and/or smartphone), a payment API, a UIKit API (e.g., for generating user interfaces), a location detection API, a locator API, a maps API, a health sensor API, a sensor API, a messaging API, a push notification API, a streaming API, a collaboration API, a video conferencing API, an application store API, an advertising services API, a web browser API (e.g., WebKit API), a vehicle API, a networking API, a Wi-Fi API, a Bluetooth API, an NFC API, a UWB API, a fitness API, a smart home API, contact transfer API, photos API, camera API, and/or image processing API.

In some embodiments, at least one API is a software module (e.g., a collection of computer-readable instructions) that provides an interface that allows a different module (e.g., API calling module) to access and use one or more functions, methods, procedures, data structures, classes, and/or other services provided by an implementation module of the system process. The API can define one or more parameters that are passed between the API calling module and the implementation module. In some embodiments, the API 590 defines a first API call that can be provided by API calling module 590, wherein the definition for the first API call specifies the following call parameters: available radios, authentication database calls, permissions to access an accessory device, connectivity status, authentication database reads, write to authentication database. The implementation module is an system software module (e.g., a collection of computer-readable instructions) that is constructed to perform an operation in response to receiving an API call via the API. In some embodiments, the implementation module is constructed to provide an API response (via the API) as a result of processing an API call. In some embodiments, the implementation module is included in the device (e.g., 550) that runs the application. In some embodiments, the implementation module is included in an electronic device that is separate from the device that runs the application.

### V. EXAMPLE COMPUTING DEVICE

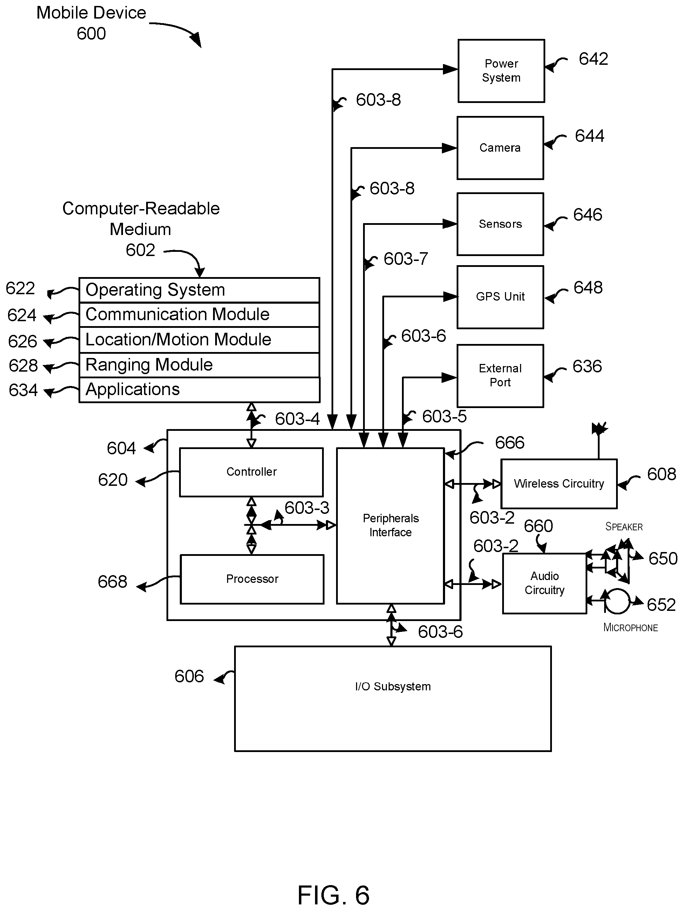

FIG. 6 is a block diagram of an example electronic device 600 according to at least one embodiment. Device 600 generally includes computer-readable medium 602, a processing system 604, an Input/Output (I/O) subsystem 606, wireless circuitry 608, and audio circuitry 610 including speaker 612 and microphone 614. These components may be coupled by one or more communication buses or signal lines 603. Device 600 can be any portable electronic device, including a handheld computer, a tablet computer, a mobile phone, laptop computer, tablet device, media player, personal digital assistant (PDA), a key fob, a car key, an access card, a multifunction device, a mobile phone, a portable gaming device, a headset, or the like, including a combination of two or more of these items.

It should be apparent that the architecture shown in FIG. 6 is only one example of an architecture for device 600, and that device 600 can have more or fewer components than shown, or a different configuration of components. The various components shown in FIG. 6 can be implemented in hardware, software, or a combination of both hardware and software, including one or more signal processing and/or application specific integrated circuits.

Wireless circuitry 608 is used to send and receive information over a wireless link or network to one or more other devices' conventional circuitry such as an antenna system, a radio frequency (RF) transceiver, one or more amplifiers, a tuner, one or more oscillators, a digital signal processor, a coder-decoder (CODEC) chipset, memory, etc. Wireless circuitry 608 can use various protocols, e.g., as described herein. In various embodiments, wireless circuitry 608 is capable of establishing and maintaining communications with other devices using one or more communication protocols, including time division multiple access (TDMA), code division multiple access (CDMA), global system for mobile communications (GSM), Enhanced Data GSM Environment (EDGE), wideband code division multiple access (W-CDMA), Long Term Evolution (LTE), LTE-Advanced, Wi-Fi (such as Institute of Electrical and Electronics Engineers (IEEE) 802.11a, IEEE 802.11b, IEEE 802.11g and/or IEEE 802.11n), Bluetooth, Wi-MAX, Voice Over Internet Protocol (VoIP), near field communication protocol (NFC), a protocol for email, instant messaging, and/or a short message service (SMS), or any other suitable communication protocol, including communication protocols not yet developed as of the filing date of this document.

Wireless circuitry 608 is coupled to processing system 604 via peripherals interface 616. Peripherals interface 616 can include conventional components for establishing and maintaining communication between peripherals and processing system 604. Voice and data information received by wireless circuitry 608 (e.g., in speech recognition or voice command applications) is sent to one or more processors 618 via peripherals interface 616. One or more processors 618 are configurable to process various data formats for one or more application programs 634 stored on medium 602.

Peripherals interface 616 couple the input and output peripherals of device 600 to the one or more processors 618 and computer-readable medium 602. One or more processors 618 communicate with computer-readable medium 602 via a controller 620. Computer-readable medium 602 can be any device or medium that can store code and/or data for use by one or more processors 618. Computer-readable medium 602 can include a memory hierarchy, including cache, main memory and secondary memory. The memory hierarchy can be implemented using any combination of random access memory (RAM) (e.g., static random access memory (SRAM,) dynamic random access memory (DRAM), double data random access memory (DDRAM)), read only memory (ROM), FLASH, magnetic and/or optical storage devices, such as disk drives, magnetic tape, CDs (compact disks) and DVDs (digital video discs). In some embodiments, peripherals interface 616, one or more processors 618, and controller 620 can be implemented on a single chip, such as processing system 604. In some other embodiments, they can be implemented on separate chips.

Processor(s) 618 can include hardware and/or software elements that perform one or more processing functions, such as mathematical operations, logical operations, data manipulation operations, data transfer operations, controlling the reception of user input, controlling output of information to users, or the like. Processor(s) 618 can be embodied as one or more hardware processors, microprocessors, microcontrollers, field programmable gate arrays (FPGAs), application-specified integrated circuits (ASICs), or the like.

Device 600 also includes a power system 642 for powering the various hardware components. Power system 642 can include a power management system, one or more power sources (e.g., battery, alternating current (AC)), a recharging system, a power failure detection circuit, a power converter or inverter, a power status indicator (e.g., a light emitting diode (LED)) and any other components typically associated with the generation, management and distribution of power in mobile devices.

In some embodiments, device 600 includes a camera 644. In some embodiments, device 600 includes sensors 646. Sensors can include accelerometers, compass, gyrometer, pressure sensors, audio sensors, light sensors, barometers, and the like. Sensors 646 can be used to sense location aspects, such as auditory or light signatures of a location.

In some embodiments, device 600 can include a GPS receiver, sometimes referred to as a GPS unit 648. A mobile device can use a satellite navigation system, such as the Global Positioning System (GPS), to obtain position information, timing information, altitude, or other navigation information. During operation, the GPS unit can receive signals from GPS satellites orbiting the Earth. The GPS unit analyzes the signals to make a transit time and distance estimation. The GPS unit can determine the current position (current location) of the mobile device. Based on these estimations, the mobile device can determine a location fix, altitude, and/or current speed. A location fix can be geographical coordinates such as latitudinal and longitudinal information.

One or more processors 618 run various software components stored in medium 602 to perform various functions for device 600. In some embodiments, the software components include an operating system 622, a communication module 624 (or set of instructions), a location module 626 (or set of instructions), a network access module 628 that is used as part of accessing the authentication database as described herein, and other application programs 634 (or set of instructions).

Operating system 622 can be any suitable operating system, including iOS, Mac OS, Darwin, Real Time Operating System (RTXC), LINUX, UNIX, OS X, WINDOWS, or an embedded operating system such as VxWorks. The operating system can include various procedures, sets of instructions, software components and/or drivers for controlling and managing general system tasks (e.g., memory management, storage device control, power management, etc.) and facilitates communication between various hardware and software components.

Communication module 624 facilitates communication with other devices over one or more external ports 636 or via wireless circuitry 608 and includes various software components for handling data received from wireless circuitry 608 and/or external port 636. External port 636 (e.g., universal serial bus (USB), FireWire, Lightning connector, 60-pin connector, etc.) is adapted for coupling directly to other devices or indirectly over a network (e.g., the Internet, wireless local area network (LAN), etc.).

Location/motion module 626 can assist in determining the current position (e.g., coordinates or other geographic location identifiers) and motion of device 600. Modern positioning systems include satellite-based positioning systems, such as Global Positioning System (GPS), cellular network positioning based on "cell IDs," and Wi-Fi positioning technology based on a Wi-Fi networks. GPS also relies on the visibility of multiple satellites to determine a position estimate, which may not be visible (or have weak signals) indoors or in "urban canyons." In some embodiments, location/motion module 626 receives data from GPS unit 648 and analyzes the signals to determine the current position of the mobile device. In some embodiments, location/motion module 626 can determine a current location using Wi-Fi or cellular location technology. For example, the location of the mobile device can be estimated using knowledge of nearby cell sites and/or Wi-Fi access points with knowledge also of their locations. Information identifying the Wi-Fi or cellular transmitter is received at wireless circuitry 608 and is passed to location/motion module 626. In some embodiments, the location module receives the one or more transmitter IDs. In some embodiments, a sequence of transmitter IDs can be compared with a reference database (e.g., Cell ID database, Wi-Fi reference database) that maps or correlates the transmitter IDs to position coordinates of corresponding transmitters, and computes estimated position coordinates for device 600 based on the position coordinates of the corresponding transmitters. Regardless of the specific location technology used, location/motion module 626 receives information from which a location fix can be derived, interprets that information, and returns location information, such as geographic coordinates, latitude/longitude, or other location fix data.

The network access module 628 may send and/or receive application or accessory device data, communication and messages to/from an antenna, e.g., connected to wireless circuitry 608. The application or accessory device data may be used by one or more services, including one or more applications and services. The network access module 628 can exist on various processors of the device, e.g., an always-on processor (AOP), a UWB chip, and/or an application processor.

The one or more applications 634 on device 600 can include any applications installed on the device 600, including without limitation, a browser, address book, contact list, email, instant messaging, social networking, word processing, keyboard emulation, widgets, JAVA-enabled applications, encryption, digital rights management, voice recognition, voice replication, a music player (which plays back recorded music stored in one or more files, such as MP3 or AAC files), etc.

There may be other modules or sets of instructions (not shown), such as a graphics module, a time module, etc. For example, the graphics module can include various conventional software components for rendering, animating and displaying graphical objects (including without limitation text, web pages, icons, digital images, animations and the like) on a display surface. In another example, a timer module can be a software timer. The timer module can also be implemented in hardware. The time module can maintain various timers for any number of events.

I/O subsystem 606 can be coupled to a display system (not shown), which can be a touch-sensitive display. The display displays visual output to the user in a GUI. The visual output can include text, graphics, video, and any combination thereof. Some or all of the visual output can correspond to user-interface objects. A display can use LED (light emitting diode), LCD (liquid crystal display) technology, or LPD (light emitting polymer display) technology, although other display technologies can be used in other embodiments.

In some embodiments, I/O subsystem 606 can include a display and user input devices such as a keyboard, mouse, and/or trackpad. In some embodiments, I/O subsystem 606 can include a touch-sensitive display. A touch-sensitive display can also accept input from the user based at least part on haptic and/or tactile contact. In some embodiments, a touch-sensitive display forms a touch-sensitive surface that accepts user input. The touch-sensitive display/surface (along with any associated modules and/or sets of instructions in computer-readable medium 602) detects contact (and any movement or release of the contact) on the touch-sensitive display and converts the detected contact into interaction with user-interface objects, such as one or more soft keys, that are displayed on the touch screen when the contact occurs. In some embodiments, a point of contact between the touch-sensitive display and the user corresponds to one or more digits of the user. The user can make contact with the touch-sensitive display using any suitable object or appendage, such as a stylus, pen, finger, and so forth. A touch-sensitive display surface can detect contact and any movement or release thereof using any suitable touch sensitivity technologies, including capacitive, resistive, infrared, and surface acoustic wave technologies, as well as other proximity sensor arrays or other elements for determining one or more points of contact with the touch-sensitive display.

Further, I/O subsystem 606 can be coupled to one or more other physical control devices (not shown), such as pushbuttons, keys, switches, rocker buttons, dials, slider switches, sticks, LEDs, etc., for controlling or performing various functions, such as power control, speaker volume control, ring tone loudness, keyboard input, scrolling, hold, menu, screen lock, clearing and ending communications and the like. In some embodiments, in addition to the touch screen, device 600 can include a touchpad (not shown) for activating or deactivating particular functions. In some embodiments, the touchpad is a touch-sensitive area of the device that, unlike the touch screen, does not display visual output. The touchpad can be a touch-sensitive surface that is separate from the touch-sensitive display, or an extension of the touch-sensitive surface formed by the touch-sensitive display.

In some embodiments, some or all of the operations described herein can be performed using an application executing on the user's device. Circuits, logic modules, processors, and/or other components may be configured to perform various operations described herein. Those skilled in the art will appreciate that, depending on implementation, such configuration can be accomplished through design, setup, interconnection, and/or programming of the particular components and that, again depending on implementation, a configured component might or might not be reconfigurable for a different operation. For example, a programmable processor can be configured by providing suitable executable code; a dedicated logic circuit can be configured by suitably connecting logic gates and other circuit elements; and so on.

Any of the software components or functions described in this application may be implemented as software code to be executed by a processor using any suitable computer language such as, for example, Java, C, C++, C#, Objective-C, Swift, or scripting language such as Perl or Python using, for example, conventional or object-oriented techniques. The software code may be stored as a series of instructions or commands on a computer readable medium for storage and/or transmission. A suitable non-transitory computer readable medium can include random access memory (RAM), a read only memory (ROM), a magnetic medium such as a hard-drive or a floppy disk, or an optical medium, such as a compact disk (CD) or DVD (digital versatile disk), flash memory, and the like. The computer readable medium may be any combination of such storage or transmission devices.

Computer programs incorporating various features of the present disclosure may be encoded on various computer readable storage media; suitable media include magnetic disk or tape, optical storage media, such as compact disk (CD) or DVD (digital versatile disk), flash memory, and the like. Computer readable storage media encoded with the program code may be packaged with a compatible device or provided separately from other devices. In addition, program code may be encoded and transmitted via wired optical, and/or wireless networks conforming to a variety of protocols, including the Internet, thereby allowing distribution, e.g., via Internet download. Any such computer readable medium may reside on or within a single computer product (e.g., a solid-state drive, a hard drive, a CD, or an entire computer system), and may be present on or within different computer products within a system or network. A computer system may include a monitor, printer, or other suitable display for providing any of the results mentioned herein to a user.

As described above, one aspect of the present technology is the gathering, sharing, and use of data, including proximity messages and data from which the proximity message is derived. The present disclosure contemplates that in some instances, this gathered data may include personal information data that uniquely identifies or can be used to contact or locate a specific person. Such personal information data can include demographic data, location-based data, telephone numbers, email addresses, twitter ID's, home addresses, data or records relating to a user's health or level of fitness (e.g., vital signs measurements, medication information, exercise information), date of birth, or any other identifying or personal information.

The present disclosure recognizes that the use of such personal information data, in the present technology, can be used to the benefit of users. For example, the personal information data can be used to determine a dwell spot using distance measurements that track a user through their daily routine. Further, other uses for personal information data that benefit the user are also contemplated by the present disclosure.

The present disclosure contemplates that the entities responsible for the collection, analysis, disclosure, transfer, storage, or other use of such personal information data will comply with well-established privacy policies and/or privacy practices. In particular, such entities should implement and consistently use privacy policies and practices that are generally recognized as meeting or exceeding industry or governmental requirements for maintaining personal information data private and secure. Such policies should be easily accessible by users and should be updated as the collection and/or use of data changes. Personal information from users should be collected for legitimate and reasonable uses of the entity and not shared or sold outside of those legitimate uses. Further, such collection/sharing should occur after receiving the informed consent of the users. Additionally, such entities should consider taking any needed steps for safeguarding and securing access to such personal information data and ensuring that others with access to the personal information data adhere to their privacy policies and procedures. Further, such entities can subject themselves to evaluation by third parties to certify their adherence to widely accepted privacy policies and practices. In addition, policies and practices should be adapted for the particular types of personal information data being collected and/or accessed and adapted to applicable laws and standards, including jurisdiction-specific considerations. For instance, in the US, collection of or access to certain health data may be governed by federal and/or state laws, such as the Health Insurance Portability and Accountability Act (HIPAA); whereas health data in other countries may be subject to other regulations and policies and should be handled accordingly. Hence different privacy practices should be maintained for different personal data types in each country.

Despite the foregoing, the present disclosure also contemplates embodiments in which users selectively block the use of, or access to, personal information data. That is, the present disclosure contemplates that hardware and/or software elements can be provided to prevent or block access to such personal information data. For example, in the case of sharing content and performing ranging, the present technology can be configured to allow users to select to "opt in" or "opt out" of participation in the collection of personal information data during registration for services or anytime thereafter. In addition to providing "opt in" and "opt out" options, the present disclosure contemplates providing notifications relating to the access or use of personal information. For instance, a user may be notified upon downloading an app that their personal information data will be accessed and then reminded again just before personal information data is accessed by the app.

Moreover, it is the intent of the present disclosure that personal information data should be managed and handled in a way to minimize risks of unintentional or unauthorized access or use. Risk can be minimized by limiting the collection of data and deleting data once it is no longer needed. In addition, and when applicable, including in certain health related applications, data de-identification can be used to protect a user's privacy. De-identification may be facilitated, when appropriate, by removing specific identifiers (e.g., date of birth, etc.), controlling the amount or specificity of data stored (e.g., collecting location data a city level rather than at an address level), controlling how data is stored (e.g., aggregating data across users), and/or other methods.

Therefore, although the present disclosure broadly covers use of personal information data to implement one or more various disclosed embodiments, the present disclosure also contemplates that the various embodiments can also be implemented without the need for accessing such personal information data. That is, the various embodiments of the present technology are not rendered inoperable due to the lack of all or a portion of such personal information data.

Although the present disclosure has been described with respect to specific embodiments, it will be appreciated that the disclosure is intended to cover all modifications and equivalents within the scope of the following claims.

All patents, patent applications, publications, and descriptions mentioned herein are incorporated by reference in their entirety for all purposes. None is admitted to be prior art.

The specification and drawings are, accordingly, to be regarded in an illustrative rather than a restrictive sense. It will, however, be evident that various modifications and changes may be made thereunto without departing from the broader spirit and scope of the disclosure as set forth in the claims.

Other variations are within the spirit of the present disclosure. Thus, while the disclosed techniques are susceptible to various modifications and alternative constructions, certain illustrated embodiments thereof are shown in the drawings and have been described above in detail. It should be understood, however, that there is no intention to limit the disclosure to the specific form or forms disclosed, but on the contrary, the intention is to cover all modifications, alternative constructions and equivalents falling within the spirit and scope of the disclosure, as defined in the appended claims.

The use of the terms "a" and "an" and "the" and similar referents in the context of describing the disclosed embodiments (especially in the context of the following claims) are to be construed to cover both the singular and the plural, unless otherwise indicated herein or clearly contradicted by context. The terms "comprising," "having," "including," and "containing" are to be construed as open-ended terms (i.e., meaning "including, but not limited to,") unless otherwise noted. The term "connected" is to be construed as partly or wholly contained within, attached to, or joined together, even if there is something intervening. The phrase "based on" should be understood to be open-ended, and not limiting in any way, and is intended to be interpreted or otherwise read as "based at least in part on," where appropriate. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate embodiments of the disclosure and does not pose a limitation on the scope of the disclosure unless otherwise claimed. No language in the specification should be construed as indicating any non-claimed element as essential to the practice of the disclosure. The use of "or" is intended to mean an "inclusive or," and not an "exclusive or" unless specifically indicated to the contrary. Reference to a "first" component does not necessarily require that a second component be provided. Moreover, reference to a "first" or a "second" component does not limit the referenced component to a particular location unless expressly stated. The term "based on" is intended to mean "based at least in part on."

Disjunctive language such as the phrase "at least one of X, Y, or Z," unless specifically stated otherwise, is otherwise understood within the context as used in general to present that an item, term, etc., may be either X, Y, or Z, or any combination thereof (e.g., X, Y, and/or Z). Thus, such disjunctive language is not generally intended to, and should not, imply that certain embodiments require at least one of X, at least one of Y, or at least one of Z to each be present. Additionally, conjunctive language such as the phrase "at least one of X, Y, and Z," unless specifically stated otherwise, should also be understood to mean X, Y, Z, or any combination thereof, including "X, Y, and/or Z."

Preferred embodiments of this disclosure are described herein, including the best mode known to the inventors for carrying out the disclosure. Variations of those preferred embodiments may become apparent to those of ordinary skill in the art upon reading the foregoing description. The inventors expect skilled artisans to employ such variations as appropriate, and the inventors intend for the disclosure to be practiced otherwise than as specifically described herein. Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein or otherwise clearly contradicted by context.

All references, including publications, patent applications, and patents, cited herein are hereby incorporated by reference to the same extent as if each reference were individually and specifically indicated to be incorporated by reference and were set forth in its entirety herein.

### NUMBERED STATEMENTS OF THE INVENTION

1. A method of secure accessory device discovery and radio pairing, the method comprising, performing, by a first device:
   receiving, at a network access routine of the first device, data from a first application running on the first device, the data indicating a one or more properties of an accessory device for communication with the first application;
   determining, through a radio of the first device, a list of one or more accessory devices, each accessory device of the list of one or more accessory devices capable of being connected to the first device via the radio;
   providing, to the network access routine, the list of one or more accessory devices;
   identifying, by the network access routine, one or more accessory devices present in the list of one or more accessory devices that have the one or more properties, thereby generating an overlap list of one or more matching accessory devices;
   displaying, on the first device, the overlap list;
   receiving, a selection of at least one accessory device from the overlap list; and
   storing, the selection in an authentication database of the first device; the authentication database comprising the first application and the selection.
2. The method of statement 1, further comprising restricting radio communication by the first application to accessory devices in the authentication database.
3. The method of statement 2, further comprising:
   receiving, at the network access routine from the first application, a communication request, and
   selecting by the network access routine a protocol for radio communication to complete the communication request based on the properties of the accessory device and a current network condition.
4. The method of statement 2, comprising:
   receiving, at the network access routine from the first application, a communication request; and
   selecting by the network access routine a protocol for radio communication to complete the communication request based on the communication request.
5. The method of statement 1, further comprising displaying an error message when the overlap list is empty.
6. The method of statement 1, wherein the radio comprises a plurality of communication interfaces.
7. The method of statement 6, further comprising:
   performing, via a first communication interface, the determining of the list of one or more accessory devices; and
   restricting radio communication by the first application to accessory devices in the authentication database, wherein the radio communication is performed on a second communication interface.
8. The method of statement 7 wherein the first communication interface is Bluetooth.
9. The method of statement 1, further comprising displaying the overlap list in an overlay window on the first device.
10. The method of statement 1 wherein the authentication database includes information indicating one or more communication interfaces through which the first device and the selection at least one accessory device from the overlap list may communicate.
11. The method of statement 1 further comprising storing the authentication database in a secure memory of the first device.
12. The method of statement 1 further comprising encrypting the authentication database.
13. The method of statement 1 further comprising removing the first application from the authentication database when the first application is removed from the first device.
14. A method of communicating with an accessory device, the method comprising, performing, by a first device:
   receiving, at a network access routine from a first application, a request to communicate with a first accessory device using a radio of the first device;
   accessing, by the network access routine, an authentication database, the authentication database containing data indicating a list of approved accessory devices;
   determining, using the list of approved accessory devices, whether communication with the first accessory device is supported; and
   establishing a connection between the first application and the first accessory device when the first accessory device is supported.
15. The method of statement 14 further comprising providing an error message when a match does not exist between the accessory device and the list of approved accessory devices.
16. The method of statement 14 wherein the authentication database is based on at least user input received during a secure pairing process.
17. The method of statement 14 further comprising, receiving, by the network access routine from the authentication database, a positive message or a negative message, the positive message indicating that communication is permitted with the first accessory device and the negative message indicating that communication is not permitted with the first accessory device.
18. The method of statement 14 wherein the network access routine performs the determining, using the list of approved accessory device, whether communication with the first accessory device is supported.
19. The method of statement 14, further comprising, receiving, by the network access routine from the authentication database, data indicating one or more communication interfaces which may be used to establish communication for each accessory device in the list of approved accessory devices.
20. A method performed wherein at least one step of any of the preceding statements is performed using an API.
21. A non-transitory computer readable medium containing instructions that, when executed by one or more processors, cause the one or more processors to perform any of the methods of any of the preceding statements.
22. A system comprising one or more processors and non-transitory computer readable medium containing instructions that, when executed by one or more processors, cause the system to perform any of the methods of any of the preceding statements.

## Claims

1. A method of secure accessory device discovery and radio pairing, the method comprising, performing, by a first device:
receiving, at a network access routine of the first device, data from a first application running on the first device, the data indicating a one or more properties of an accessory device for communication with the first application;
determining, through a radio of the first device, a list of one or more accessory devices, each accessory device of the list of one or more accessory devices capable of being connected to the first device via the radio;
providing, to the network access routine, the list of one or more accessory devices;
identifying, by the network access routine, one or more accessory devices present in the list of one or more accessory devices that have the one or more properties, thereby generating an overlap list of one or more matching accessory devices;
displaying, on the first device, the overlap list;
receiving, a selection of at least one accessory device from the overlap list; and
storing, the selection in an authentication database of the first device; the authentication database comprising the first application and the selection.

2. The method of claim 1, further comprising restricting radio communication by the first application to accessory devices in the authentication database.

3. The method of claim 2, further comprising:
receiving, at the network access routine from the first application, a communication request,
and
selecting by the network access routine a protocol for radio communication to complete the communication request based on the properties of the accessory device and a current network condition.

4. The method of claim 2 or 3, comprising:
receiving, at the network access routine from the first application, a communication request; and
selecting by the network access routine a protocol for radio communication to complete the communication request based on the communication request.

5. The method of any preceding claim, further comprising displaying an error message when the overlap list is empty.

6. The method of any preceding claim, wherein the radio comprises a plurality of communication interfaces.

7. The method of claim 6, further comprising:
performing, via a first communication interface, the determining of the list of one or more accessory devices; and
restricting radio communication by the first application to accessory devices in the authentication database, wherein the radio communication is performed on a second communication interface.

8. The method of claim 7 wherein the first communication interface is Bluetooth.

9. The method of any preceding claim further comprising displaying the overlap list in an overlay window on the first device.

10. The method of any preceding claim wherein the authentication database includes information indicating one or more communication interfaces through which the first device and the selection at least one accessory device from the overlap list may communicate.

11. The method of any preceding claim further comprising storing the authentication database in a secure memory of the first device.

12. The method of any preceding claim further comprising encrypting the authentication database.

13. The method of any preceding claim further comprising removing the first application from the authentication database when the first application is removed from the first device.

14. A computer readable medium comprising instructions that, when executed by one or more processors, cause the one or more processors to perform the methods of any preceding claim.

15. A system comprising one or more processors and non-transitory computer readable medium containing instructions that, when executed by one or more processors, cause the system to perform the method of any of claims 1 to 13.
